**Europäisches Patentamt**

**European Patent Office**

**Office européen des brevets**

(11) Veröffentlichungsnummer : **0 474 033 B1**

(12) # EUROPÄISCHE PATENTSCHRIFT

(45) Veröffentlichungstag der Patentschrift :
05.04.95 Patentblatt 95/14

(51) Int. Cl.$^6$ : **G05B 11/16**

(21) Anmeldenummer : **91114004.4**

(22) Anmeldetag : **21.08.91**

(54) **Zustandsorientiertes Steuerverfahren.**

(30) Priorität : **07.09.90 DE 4028514**

(43) Veröffentlichungstag der Anmeldung :
**11.03.92 Patentblatt 92/11**

(45) Bekanntmachung des Hinweises auf die
Patenterteilung :
**05.04.95 Patentblatt 95/14**

(84) Benannte Vertragsstaaten :
**CH DE FR GB IT LI SE**

(56) Entgegenhaltungen :
**US-A- 4 481 457**

(56) Entgegenhaltungen :
**PESC'88 RECORD OF THE 19TH ANNUAL IEEE
POWER ELECTRONICS SPECIALISTS CONFE-
RENCE Bd. 2, April 1988, KYOTO JP Seiten 634
- 643; T. KAWABATA ET AL.: 'DIGITAL CON-
TROL OF THREE PHASE PWM INVERTER
WITH L-C- FILTER'**

(73) Patentinhaber : **SIEMENS
AKTIENGESELLSCHAFT
Wittelsbacherplatz 2
D-80333 München (DE)**

(72) Erfinder : **Amler, Gerald, Dipl.-Ing.
Herpersdorfer Strasse 22
W-8500 Nürnberg (DE)**

## Beschreibung

Die Erfindung bezieht sich auf ein Verfahren und eine Vorrichtung zur Ermittlung von Umschaltzeitpunkten bei einem wertediskreten Stellglied mit nicht vernachlässigbarer Mindestschaltzeit und endlich vielen diskreten Zuständen, deren Werte zeitlich veränderbar sind.

Wertediskrete Stellglieder besitzen nur endlich viele verschiedene Zustände, die am Ausgang eingestellt werden können. Soll ein Zwischenwert erzeugt werden, ist das näherungsweise möglich, wenn man zwischen benachbarten Zuständen hin- und herwechselt und so im zeitlichen Mittel den zu erzeugenden Wert approximiert. Die bei technischen Systemen im allgemeinen vorhandene Tiefpaßwirkung in der Regelstrecke glättet diese Wechselgröße.

Bei einem Zweipunktregler mit oder ohne Hysterese verursacht dieser Regler eine Zustandsänderung immer dann, wenn die Differenz zwischen Soll- und Istwert einen bestimmten Grenzwert übersteigen. Das System kann so einem sich ändernden Sollwert mit maximaler Geschwindigkeit folgen. Macht man die Hysterese beliebig klein, ergebe sich bei Systemen ohne Totzeit eine unendlich hohe Schaltfrequenz. Die Hysterese ist also derart vorzugeben, daß sie entweder eine gewünschte mittlere Schaltfrequenz einstellt oder daß in allen Betriebspunkten die Mindestschaltzeit nicht unterschritten wird. Im ersten Fall kann es zu ausgeprägten Ausregelbewegungen kommen, wenn die Mindestschaltzeit durch die Steuerlogik zwangsweise eingehalten wird. Im zweiten Fall vermeidet man diesen Effekt, erhält dagegen nur eine suboptimale Ausnutzung des Stellgliedes.

Eine weitere Anordnung zur Approximation eines Zwischenwertes zweier benachbarter Zustände eines wertediskreten Stellgliedes, besteht aus einem Regler, einem Komparator und einer Quelle für eine Hilfsgröße (eine im Wertebereich gleichverteilte Funktion, beispielsweise eine Sägezahn- oder Dreiecksfunktion). Der Komparator vergleicht die Hilfsgröße mit der in wertekontinuierlicher Form vorliegenden Stellgröße, die vom Regler erzeugt wird. Liegt der Wert der Hilfsgröße höher als der Reglerausgang schaltet das Stellglied in den einen Zustand, sonst in den anderen. Über eine Periode der Hilfsgröße gemittelt stellt sich so der gewünschte Sollwert ein. Durch diese Vorgehensweise erzielt man näherungsweise ein lineares Verhalten des Stellgliedes.

Im Unterschied zum Zweipunktregler mit oder ohne Hysterese ergibt sich hier eine feste Schaltfrequenz, aber dafür eine längere Reaktionszeit auf Sollwertänderungen. Die Probleme mit der Mindestschaltzeit treten hier genauso auf, vor allem bei hohen Aussteuergraden, d.h. wenn der Ausgang des Reglers einen Wert verlangt, der nahe eines Zustandes des Stellgliedes liegt.

Durchläuft die Sollgröße periodisch eine bestimmte Funktion (beispielsweise einen Sinus), so kann man sich im Voraus geeignete, auf die Periode bezogene Schaltpunkte berechnen. Dabei kann auch die Mindestschaltzeit berücksichtigt werden. Je nach Betriebspunkt (Periodendauer und Aussteuerung) ist allerdings ein geeignetes Muster zu berechnen. Jede Verschiebung des Betriebspunktes erfordert einen Übergang zwischen verschiedenen Pulsmustern. Dieser Übergang dauert entweder sehr lange, da nur zu bestimmten Zeitpunkten innerhalb der Periode das Pulsmuster gewechselt werden darf oder es entstehen Fehler, da das Muster nicht an seinen optimalen Punkten betrieben wird und so z.B. die Mindestschaltzeit nicht eingehalten werden kann.

Der Erfindung liegt nun die Aufgabe zugrunde, ein Verfahren und eine Vorrichtung zur Ermittlung von Umschaltzeitpunkten bei einem wertediskreten Stellglied mit nicht vernachlässigbarer Mindestschaltzeit und endlich vielen diskreten Zuständen anzugeben, wodurch die aufgeführten Nachteile vermieden werden.

Diese Aufgabe wird erfindungsgemäß mit den Merkmalen des Anspruchs 1 gelöst.

Durch dieses erfindungsgemäße Verfahren wird das Verhalten des zu regelnden Systems für die Zukunft abgeschätzt und nur dann geschaltet, wenn während einer sich an den Umschaltzeitpunkt anschließende Mindestschaltzeit die Differenz zwischen einen Soll- und einen Istwert einer Regelgröße nicht größer als vor der Umschaltung wird (zustandsorientiertes Steuerverfahren). Dadurch werden die Umschaltzeitpunkte so ermittelt, daß sich ein möglichst symmetrisches Pendeln vom Regelgrößen-Istwert um den Regelgrößen-Sollwert ergibt.

Dieses zustandsorientierte Steuerverfahren liefert sowohl für stationäre als auch für dynamische Betriebszustände optimale Schaltzeitpunkte (Umschaltzeitpunkte) und Schaltreihenfolgen. Die Berücksichtigung der Randbedingungen, wie der Mindestschaltzeit des Stellgliedes, liefert auch bei niedrigen Pulszahlen stabile "Pulsmuster" bis in den Vollblockbereich.

Der Aufbau einer erfindungsgemäßen Vorrichtung zur Durchführung des Verfahrens ist den Ansprüchen 4 bis 6 zu entnehmen.

Umrichter sind schaltende Systeme. Um dennoch ein weitgehend lineares Eingangs-/Ausgangsverhalten erzielen zu können, benutzt man beispielsweise Pulsweitenmodulationsverfahren. Soweit dabei die Schaltfrequenz hoch genug ist, werden die Schaltvorgänge durch die Tiefpaßwirkung derartiger Systeme herausgefiltert. Bei vielen Umrichtern liegt aber aufgrund der Verluste oder der technischen Möglichkeiten, die maximale Schaltfrequenz nicht wesentlich von der maximalen Ausgangsfrequenz entfernt, wodurch noch nennenswerte Oberschwingungen in den Regelgrößen erscheinen. Man versucht durch spezielle Pulsmuster die Umschaltvorgänge bezogen auf eine Periode der Regelgröße so vorzugeben, daß bestimmte Optimierungskriterien (Oberschwingungen, Verluste, etc.) erfüllt werden und dabei aber auch die technischen Möglichkeiten beachtet werden. Diese Vorgehensweise hat einen großen Nachteil, nämlich, daß durch den Bezug auf eine Periode der Regelgröße jeder Betriebspunkt (Frequenz und Lastwinkel oder Aussteuergrad) ein eigenes dafür optimiertes Pulsmuster erfordert. Übergangsvorgänge können dabei nicht berücksichtigt werden und erlauben daher nur einen suboptimalen Betrieb, der um so schlechter wird, je schneller die dynamischen Veränderungen ablaufen. Darüber hinaus wird die Regelung durch den Integrator im Steuersatz, der die Pulsmuster an den Umrichter übergibt, langsamer als notwendig.

Eine Verwendung dieses erfindungsgemäßen Verfahrens und dieser Vorrichtung ist dem Anspruch 7 zu entnehmen.

Durch die Verwendung des erfindungsgemäßen Verfahrens bei einer Drehzahlregelung einer stromrichtergespeisten Asynchronmaschine wird der Umrichter bestmöglichst ausgenutzt, da die Randbedingung (Mindestschaltzeit) des Umrichters stets beachtet wird und die Grenzen ausgenutzt werden. Außerdem werden die Oberschwingungen minimal und die Momentendynamik wird praktisch nur noch durch die Zwischenkreisstromdynamik begrenzt. Ferner erhält man einen ruhigen Lauf der Asynchronmaschine bis in den Vollblockbetrieb.

Zur weiteren Erläuterung der Erfindung wird auf die Zeichnung bezug genommen, in der Ausführungsbeispiele einer Vorrichtung zur Durchführung des erfindungsgemäßen Verfahrens schematisch veranschaulicht sind.

| | |
|---|---|
| FIG 1 | zeigt eine Strecke mit einem wertediskreten Stellglied und einer Vorrichtung zur Ermittlung von Umschaltzeitpunkten, in |
| FIG 2 | ist eine Ausgangsgröße des wertediskreten Stellgliedes in einem Diagramm über der Zeit t dargestellt, in |
| FIG 3 | ist das Streckenverhalten bei zustandsorientierter Steuerung in einem Diagramm über der Zeit t dargestellt, in |
| FIG 4 | ist eine Soll-Ist-Abweichung in einem Diagramm über der Zeit t dargestellt, |
| FIG 5 | zeigt ein Blockschaltbild einer zustandsorientierten Steuerung für einen Stromzwischenkreisumrichter, |
| FIG 6 | veranschaulicht die endlich vielen diskreten Zustände des maschinenseitigen Stromrichters des Stromzwischenkreisumrichters gemäß FIG 5, |
| FIG 7 | zeigt ein Vektordiagramm bei Stillstand der Asynchronmaschine, die |
| FIG 8 | zeigt den zum Vektordiagramm gemäß FIG 7 gehörenden Drehmomentverlauf, die |
| FIG 9 | zeigt den zum Vektordiagramm gemäß FIG 7 gehörenden Drehzahlverlauf, die |
| FIG 10 bis 12 | zeigen das Diagramm bzw. die Verläufe der Figuren 7 bis 9 bei drehender Asynchronmaschine, in |
| FIG 13 | sind Momentenanregelzeiten verschiedener Steuerverfahren in einem Diagramm über der Zeit t dargestellt und in |
| FIG 14 | sind Schaltfrequenzverläufe eines Umrichters, der mit verschiedenen Steuerverfahren gesteuert wird, in einem Diagramm über der Zeit t dargestellt. |

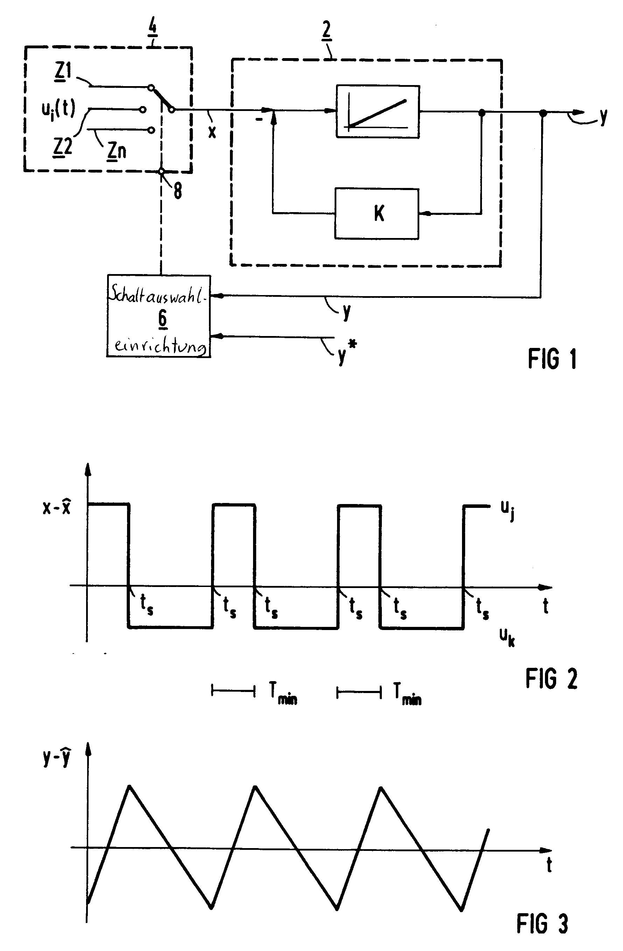

Die FIG 1 zeigt eine Strecke 2, die von einem Stellglied 4 angesteuert wird, und eine Vorrichtung 6 zur Ermittlung von Umschaltzeitpunkten $t_s$, auch Schaltzustand- und Schaltzeitauswahleinrichtung genannt, der eingangsseitig ein Regelgrößen-Istwert y und ein Regelgrößen-Sollwert y∗ zugeführt sind und ausgangsseitig mit einem Steuereingang 8 des Stellgliedes 4 verknüpft ist.

Nimmt man an, daß die Strecke 2 relativ zur Schaltfrequenz $f_u$ in erster Näherung ein integrierendes Verhalten aufweist, so ergibt sich der Istwert y näherungsweise zu

$$y \simeq \int x(t)\, dt \quad (1)$$

wenn die Rückführkonstante K klein gegenüber der Schaltfrequenz $f_u$ des Stellgliedes 4 ist. Das Stellglied 4 besitzt n verschiedene Schaltmöglichkeiten bzw. Zustände $\underline{Z}1$ bis $\underline{Z}n$ mit den Werten $u_i(t)$ mit i = 1,...,n. Diese Werte $u_i(t)$ können auch zeitlich veränderlich sein. Um einen Wert $\hat{y}$ eines Regelgrößen-Sollwertes y∗ einzustellen, wäre eigentlich ein bestimmter Wert $\hat{x}$ einer Stellglied-Ausgangsgröße x notwendig. Im allgemeinen gibt es aber keinen Wert $u_i$ des Stellgliedes 4 für den gilt:

$$u_i(t) = \hat{x} \quad (2)$$

D.h., das Stellglied 4 muß zwischen den Zuständen $\underline{Z}_j$ und $\underline{Z}_k$ mit den Werten $u_j$ und $u_k$ hin- und herschalten, für die gelten:

$$|u_j - \hat{x}| = \min \quad \text{mit} \quad u_j > \hat{x} \quad (3)$$

und

$$|u_k - \hat{x}| = \min \qquad \text{mit} \qquad u_k < \hat{x} \quad (4)$$

Eine optimale Regelung wird dann erreicht, wenn die Stellglied-Ausgangsgröße x so gewählt wird, daß eine Abweichung $\xi$ minimal wird. D.h., der Wert $\xi$ eines Integrals über eine Soll-Ist-Abweichung soll gemäß folgender Gleichung:

$$\xi = \int_{-\infty}^{\infty} |y - y^*| \; dt = \min \qquad (5)$$

minimal werden.

Kann unendlich schnell zwischen zwei Werte $u_j$ und $u_k$ zweier Zustände $\underline{Z}_j$ und $\underline{Z}_k$ des Stellgliedes 4 gewechselt werden, so wird die Abweichung $\xi$ zu Null. Existiert aber eine Mindestschaltzeit $T_{min}$ und damit eine endliche Schaltfreuqenz $f_u$, müssen die Schaltzeitpunkte bzw. Umschaltzeitpunkte $t_s$ so gewählt werden, daß sich ein möglichst symmetrisches Pendeln des Regelgrößen-Istwertes y um den Regelgrößen-Sollwert $\hat{y}$ ergibt. Dabei sollte derjenige Zustand $\underline{Z}_i$ gerade die Mindestschaltzeit $T_{min}$ eingeschalten sein, für dessen Wert $u_i$ gilt:

$$|u_i - \hat{x}| = \max \qquad \text{für } i = j,k \quad (6)$$

Gemäß FIG 2, in dem eine Ausgangsgröße x des Stellgliedes 4 in einem Diagramm über der Zeit t dargestellt ist, ist der Zustand $\underline{Z}_j$ für die Mindestschaltzeit $T_{min}$ eingeschalten. In FIG 3 ist das entsprechende Streckenverhalten in einem Diagramm über der Zeit t dargestellt, wenn die Ausgangsgröße x des Stellgliedes 4 entsprechend zwischen der Werten $u_j$ und $u_k$ hin- und herschaltet. Gemäß FIG 3 pendelt symmetrisch der Regelgrößenlstwert y um den Regelgrößen-Sollwert $\hat{y}$.

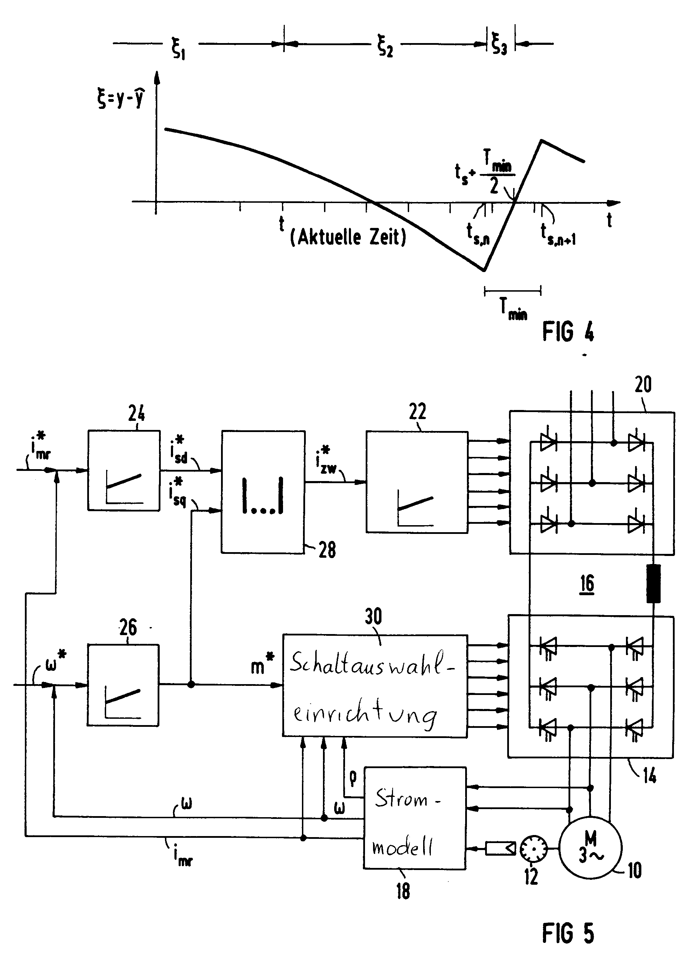

Nimmt man an, daß sich der Wert $u_i(t)$ eines Zustandes $\underline{Z}_i$ des Stellgliedes 4 während einer Schaltperiode nur unwesentlich ändert, ist die optimale Steuerung dann erreicht, wenn nach Ablauf einer sich dem ermittelten Umschaltzeitpunkt $t_s$ anschließenden halben Mindestschaltzeit $T_{min}/2$ der Wert des Regelgrößen-Istwertes y gleich dem Wert $\hat{y}$ des Regelgrößen-Sollwertes y* ist. Ausgehend von einer aktuellen Zeit t bzw. Abtastzeitpunkt $t_a$ gemäß FIG 4, kann durch Extrapolation bei einem bekannten Wert $u_i(t)$ eines bekannten Zustandes $\underline{Z}_i$ des Stellgliedes 4 die Abweichung $y - \hat{y}$ geschätzt werden. Sei $t_s$ der nächste Umschaltzeitpunkt (betrachtet von der aktuellen Zeit t ist $t_s$ ein Zeitpunkt in der Zukunft), so ergibt sich folgende Gleichung:

$$\xi(t_s) = \int_{0}^{t_s + T_{min}/2} (y(\tau) - y^*(\tau)) \; d\tau = 0 \qquad (7)$$

Dieses Fehlerintegral $\xi$ läßt sich nun in drei Bestandteile aufspalten:

$$\xi(t_s) = \xi_1 + \xi_2 + \xi_3 \quad (8)$$

mit

$$\xi_1 = \int_{0}^{t} (y(\tau) - y^*(\tau)) \; d\tau \qquad (9)$$

$$\xi_2 = \int_{t}^{t_s} (y(\tau) - y^*(\tau)) \; d\tau \qquad (10)$$

und

$$\xi_3 = \int_{t_s}^{t_{st} + T_{min}/2} (y(\tau) - y^*(\tau))\, d\tau \qquad\qquad (11)$$

Der erste Teil $\xi_1$ des Fehlerintegrals $\xi(t_s)$ beschreibt die Abweichung bis zum aktuellen Zeitpunkt t bzw. Abtastzeitpunkt $t_a$, also einen bekannten Verlauf. Der zweite Teil $\xi_2$ gibt den Verlauf der Regelgröße y bis zum Umschaltzeitpunkt $t_s$ wieder. Dieser Teil $\xi_2$ muß für die Zukunft vorhergesagt werden. Schließlich der Teil $\xi_3$ beschreibt den Verlauf der Regelgröße y nach der Umschaltung bis zur halben Mindestschaltzeit $T_{min}/2$. Auch dieser Teil $\xi_3$ muß für die Zukunft vorausgesagt werden. Die Unterscheidung zwischen dem Teil $\xi_2$ und dem Teil $\xi_3$ ist nötig, da der Wert $u_i(t)$ eines Zustandes $\underline{Z}_j$ des Stellgliedes 4 sich ändert. Die Teile $\xi_2$ und $\xi_3$ sind vom Umschaltzeitpunkt $t_s$ abhängig. Die Teile $\xi_2$ und $\xi_3$ werden jeweils in einer Taylerreihe entwickelt.

Die Lösung der daraus entstehenden Gleichung für $t_s$ ergibt den optimalen Umschaltzeitpunkt. Mit einem Rechner können diese Gleichungen gelöst und ein Zähler gesetzt werden, der das Stellglied 4 nach Ablauf der berechneten Zeit zum Umschalten veranlaßt.

Die FIG 5 zeigt eine Verwendung des erfindungsgemäßen Verfahrens und der Vorrichtung zur Durchführung des Verfahrens. Diese zustandsorientierte Steuerung wird bei einer Drehzahlregelung einer stromrichtergespeisten Asynchronmaschine 10 mit Drehzahlgeber 12 verwendet. Die Asynchronmaschine 10 wird gespeist von einem lastseitigen Stromrichter 14 auch Wechselrichter 14 genannt. Dieser Wechselrichter 14 (Stellglied) ist Bestandteil eines Stromzwischenkreisumrichters 16. Die Regel- und Steuereinrichtung, deren Blockschaltbild diese FIG 5 wiedergibt, arbeitet mit einem Strommodell 18 und dem Drehzahlgeber 12. Natürlich kann auch eine geberlose Regelung mit einem Spannungsmodell vorgesehen werden, wobei dann aber kein geregelter Betrieb bei kleinen Drehzahlen (kleiner als 5 Hz) möglich ist. Die Regelung des netzseitigen Stromrichters 20 ist im Zusammenhang der zustandsorientierten Steuerung von untergeordneter Bedeutung. Sie ist in einem Block "Gleichrichterregelung" zusammengefaßt, der mit dem Bezugszeichen 22 versehen ist. Außerdem enthält die Regel- und Steuereinrichtung einen Flußregler 24, einen Drehzahlregler 26, einen Betragsbildner 28 und eine Schaltzustands- und Schaltzeitauswahleinrichtung 30. Das Strommodell 18 ermittelt aus wenigstens zwei Klemmenstrom-Istwerten und der Läuferdrehzahl $\omega$ oder dem Läuferwinkel den Feldwinkel $\zeta$ und den Magnetisierungsstrom $i_{mr}$. Der Flußregler 24 erzeugt aus einem Vergleich eines Magnetisierungsstrom-Sollwertes $i_{mr}^*$ mit dem Magnetisierungsstrom-Istwert $i_{mr}$ einen flußbildenden Stromkomponenten-Sollwert $i_{sd}^*$ und der Drehzahlregler 26 generiert aus einem Vergleich eines Drehzahl-Sollwertes $\omega*$ mit dem Drehzahl-Istwert $\omega$ eine momentbildende Sollstromkomponente $i_{sq}^*$ Der Betragsbildner 28 bildet aus den beiden feldorientierten Stromkomponenten-Sollwerten $i_{sd}^*$ und $i_{sq}^*$ einen Stromzwischenkreis-Sollwert $i_{zw}^*$, der mittels der Gleichrichterregelung 22 in Steuersignale für den netzseitigen Stromrichter 20 gewandelt wird. Der momentbildende Stromkomponenten-Sollwert $i_{sq}^*$ ist als Momenten-Sollwert $m*$ der Schaltzustands- und Schaltzeitauswahleinrichtung 30 zugeführt. Außerdem sind dieser Einrichtung 30 die Ausgangsgrößen $\zeta$, $\omega$ und $i_{mr}$ des Strommodells 18 zugeführt. Diese Einrichtung 30 ermittelt aus diesen Werten $\zeta$, $\omega$ und $i_{mr}$ mittels des erfindungsgemäßen Verfahrens die Schaltzustände $\underline{Z}1,...,\underline{Z}6$ und die Schaltzeiten $t_s$ für den Wechselrichter 14. Diese Einrichtung 30 enthält bei einem hardwaremäßigen Aufbau folgende Komponenten: Momentenregler, Steuersatz und Schaltzeitauswahleinrichtung. Bei einer softwaremäßigen Realisierung der Einrichtung ist ein Rechner vorgesehen.

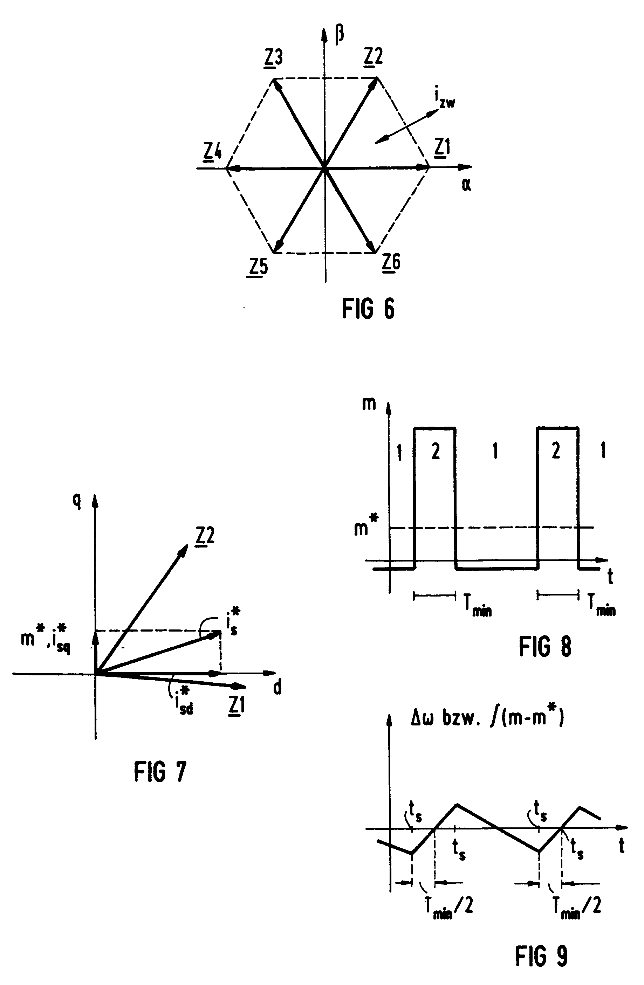

Der Wechselrichter 14 kann nur die in der FIG 6 dargestellten Zustände $\underline{Z}1$ bis $\underline{Z}6$, auch Raumzeiger genannt, erzeugen. Die Beträge dieser sechs verschiedenen Stromvektoren $\underline{Z}1$ bis $\underline{Z}6$ können kontinuierlich durch den Betrag des Zwischenkreisstromes $i_{zw}$ verändert werden. Der Winkel dagegen ist diskontinuierlich.

Anhand der FIG 7 bis 9 wird das zustandsorientierte Schaltverfahren für den Stromzwischenkreisumrichter 16 mit Phasenfolgelöschung näher erläutert: Die FIG 7 zeigt in Feldkoordinaten d und q die Bildung des Sollstromvektors $i_s^*$ aus dem momentenbildenden Strom $i_{sq}^*$ und dem flußbildenden Strom $i_{sd}^*$. Die mit $\underline{Z}1$ und $\underline{Z}2$ bezeichneten Vektoren stellen zwei der möglichen Stromvektoren bzw. Zustände $\underline{Z}1$ bis $\underline{Z}6$ des Wechselrichters 14 (Stellglied) dar. Die Projektion der Stromvektoren $\underline{Z}1$ und $\underline{Z}2$ auf die senkrechte Achse q ergibt den drehmomentbildenden Anteil. Man erkennt, daß keiner von beiden der richtige ist. Deshalb kann auch die Drehzahl nie einen stationären Wert erreichen. Die Einrichtung 30 muß nun die Vektoren $\underline{Z}1$ und $\underline{Z}2$ so einschalten, daß der Vektor mit der größten Drehmomentabweichung vom Sollwert $m*$, im dargestellten Fall der Vektor $\underline{Z}2$, gerade die Mindestschaltzeit $T_{min}$ eingeschaltet bleibt, während der Vektor $\underline{Z}1$ solange eingeschaltet wird (FIG 8), daß sich ein symmetrisches Pendeln um die Solldrehzahl $\omega*$ (FIG 9) ergibt. Ein solcher symmetrischer Verlauf stellt mit der Randbedingung der Mindestschaltzeit $T_{min}$ den optimalen Verlauf dar. Um den jeweiligen Schaltzeitpunkt $t_s$ (Umschaltzeitpunkt $t_s$) zu bestimmen, muß man, da man während der Mindestschaltzeit $T_{min}$ keinen Einfluß auf das weitere Geschehen hat, vorausschauen, was sich während dieser Zeit abspielt. Nimmt man an, daß sich die Drehzahl $\omega$ während der Mindestschaltzeit $T_{min}$ linear verändert, so erzielt man dann ein symmetrisches Pendelverfahren, wenn die Drehzahlabweichung $\Delta\hat{\omega}$ zum Zeitpunkt $t_s + T_{min}/2$ gerade Null ergibt. Die Gleichungen (9) bis (11) für die vorausschauende Berechnung der Drehzahlabweichung $\Delta\omega$ sind also für den Zeitpunkt $t_s + T_{min}/2$ gleich Null zu setzen und nach dem Schaltzeitpunkt $t_s$ aufzulösen. Bei dieser Darstellung mittels der FIG 7 bis 9 ist angenommen worden, daß sich die Maschine 10 nicht bewegt.

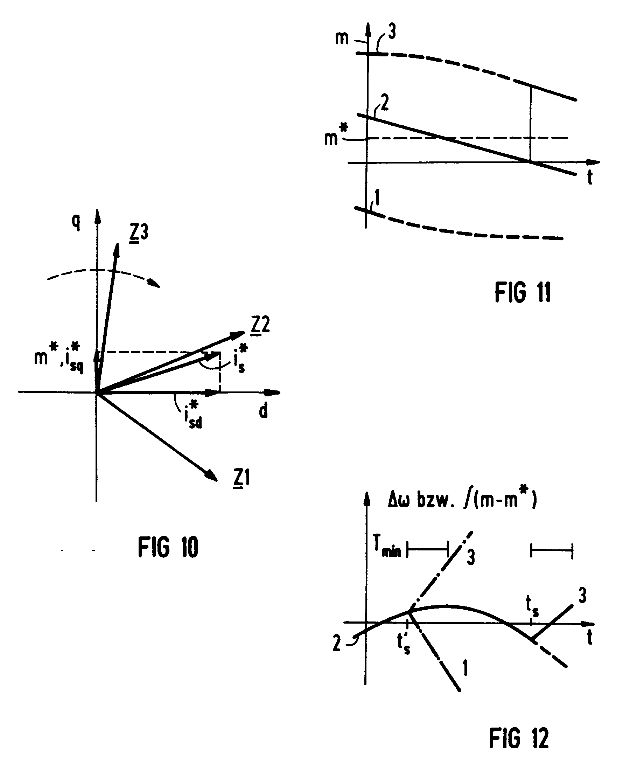

Bei den FIG 10 bis 12 ist angenommen worden, daß sich die Maschine 10 dreht, d.h., das Stromvektorsechseck gemäß FIG 6 dreht sich, und der Stromsollwert $i_s^*$ befindet sich nahe oder direkt auf dem Iststromvektor $\underline{Z}2$ (FIG 10). Eine direkte Deckung der beiden Vektoren $i_s^*$ und $\underline{Z}2$ ist natürlich der Idealzustand, doch durch die Drehung des Rotors der Asynchronmaschine 10 ergibt sich sehr schnell eine Abweichung. Nun stellt sich die Frage, auf welchen der beiden Vektoren $\underline{Z}1$ und $\underline{Z}3$ soll geschaltet werden und vor allem wann?

Ein Umschalten auf den Vektor $\underline{Z}3$ zum Zeitpunkt $t'_s$ (FIG 11) verschlechtert die Lage nur (Drehzahlabweichung $\Delta\omega$ nimmt mit der Zeit t zu). Ein Umschalten auf den Vektor $\underline{Z}1$ verbessert augenblicklich das Ergebnis, doch nach der Mindestschaltzeit $T_{min}$ ist die Drehzahlabweichung $\Delta\omega$ über den Wert zum Zeitpunkt $t'_s$ angestiegen. Wird jedoch mit der Umschaltung noch bis zum Zeitpunkt $t_s$ gewartet, so erzielt man das optimale Ergebnis, da durch die Bewegung des Stromvektors $i_s^*$ über den Istvektor $\underline{Z}2$ hinweg, die Drehmomentabweichung $\Delta m$ bzw. die Drehzahlabweichung $\Delta\omega$ von selbst das Vorzeichen geändert hat (FIG 11).

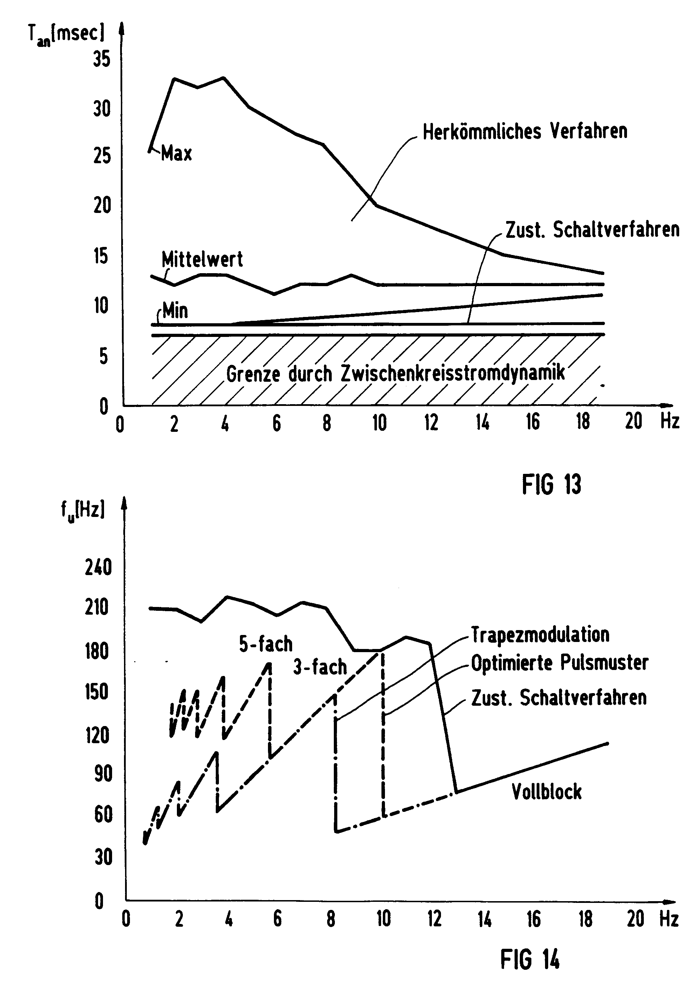

Die FIG 13 zeigt die Anregelzeit des Drehmoments auf die jeweiligen Verfahren bezogen. Im Gegensatz zum erfindungsgemäßen zustandsorientierten Schaltverfahren, das näherungsweise eine konstante Momentenanregelzeit unabhängig von der Drehzahl aufweist, die nur durch die Dynamik des Zwischenkreisstromes $i_{zw}$ begrenzt ist, bietet ein herkömmliches Verfahren mit festen Pulsmustern eine stark schwankende Anregelzeit. Die Anregelzeit ist dabei vom Pulssystem und der momentanen Position darin zum Zeitpunkt der Drehmomentanforderung abhängig. In manchen Fällen kann die Anregelzeit nahe an die Vorgabe durch das zustandsorientierte Schaltverfahren herankommen, in ungünstigen Fällen dagegen beträgt die Anregelzeit mehr als 30 msec. (zeitlicher Unterschied von mehr als 25 msec.). Pulssysteme höherer Ordnung weisen hier die höchsten Werte auf. Bei niedriger Ordnung (Vollblock) und bei asynchronen Pulsen werden die Anregelzeiten kleiner. Im allgemeinen stellt sich jedoch ein Mittelwert im unteren Drittel der Schwankungsbreite ein. Die deutlich sichtbaren Ecken im Verlauf der Kurven sind im wesentlichen auf die relativ kleine Anzahl der beobachteten Vorgänge zurückzuführen.

In FIG 14 sind Schaltfrequenzverläufe eines Umrichters, der mit verschiedenen Steuerverfahren gesteuert wird, in einem Diagramm über der Zeit t dargestellt. In dieser Figur erkennt an den typischen gezackten Verlauf der Verfahren mit festen Pulsmustern. Da die Pulsmuster stets bis zu der Frequenz ausgesteuert werden, bei der der schmalste Puls gerade der Mindestschaltzeit entspricht, werden bei den optimierten Pulsmustern höhere Schaltfrequenzen erreicht. Das erfindungsgemäße zustandsorientierte Schaltverfahren arbeitet mit einer noch höheren Schaltfrequenz ohne jedoch diesen gezackten Verlauf aufzuweisen. Im Bereich von 8 bis 13 Hz sind auch hier Treppen zu erkennen, die sich an den Verlauf der Kurve für die optimierten Pulsmuster annähern. Bei 8 Hz erfolgt allmählich der Übergang auf ein Dreifach-System. Bei 10 Hz tritt praktisch nur noch dieses System auf (Identität mit der Kurve für optimierte Pulsmuster) und geht bis ca. 13 Hz in den Vollblockbetrieb über, der bei allen drei Verfahren der gleiche ist. Eine Schaltfrequenz $f_u$ von ca. 200 Hz ist dennoch nicht zu hoch, wenn man bedenkt, daß der Umrichter bei einer Drehzahl von 50 Hz schon mit 300 Hz (Summe über alle Ventile) schalten muß. Für einen einzelnen Thyristor ergibt sich Schalthäufigkeit, wenn man die Zahlen aus dieser Figur durch sechs dividiert. Ein Sonderfall, der aber im Betrieb nicht auftritt, ergibt sich im Stillstand, wenn der Sollstromvektor $i_s^*$ genau zwischen zwei möglichen Raumzeigern liegt. In diesem Fall würden nur zwei Thyristoren beteiligt sein und die Schaltfrequenz auf $1/(2\,T_{min})$ ansteigen. Die kleinste Last erzeugt aber schon einen gewissen Schlupf, der eine Drehung des Sollstromvektors $i_s^*$ und damit eine andere Schaltfrequenz $f_u$ und andere Raumzeiger erfordert. Die thermische Belastung verteilt sich somit wieder.

Mittels dieses erfindungsgemäßen Verfahren (zustandsorientiertes Schaltverfahren) werden folgende Verbesserungen erzielt:
- Bestmögliche Umrichterausnutzung, da die Randbedingung des Umrichters stets beachtet und die
- Grenzen ausgenutzt werden,
- minimale Oberschwingungen,
- Momentendynamik ist praktisch nur durch die Zwischenkreisstromdynamik begrenzt und
- ruhiger Lauf des Motors bis in den Vollblockbetrieb.

Dieses zustandsorientierte Schaltverfahren unterscheidet sich von herkömmlichen Verfahren vor allem

EP 0 474 033 B1

im unteren Drehzahlbereich und bietet dort Vorteile. Im Vollblockbetrieb und zu höheren Frequenzen dagegen, sind die Vorteile geringer, so daß in diesem Bereich auch weiterhin mit einem herkömmlichen Verfahren gearbeitet werden kann. Einsatzpunkte sind somit dort zu sehen, wo es auf optimale Regelbarkeit und kleinste Drehzahlwelligkeit bei niedrigen Frequenzen ankommt.

**Patentansprüche**

1. Verfahren zur Ermittlung von Umschaltzeitpunkten ($t_s$) bei einem eine Regelstrecke (2) steuerenden, wertediskreten Stellglied (4,14) mit nicht vernachlässigbarer Mindestschaltzeit ($T_{min}$) und endlich vielen diskreten Zuständen ($\underline{Z}1,...,\underline{Z}n$), deren Werte ($u_i(t)$) zeitlich veränderbar sind, wobei ausgehend von einem geschalteten Zustand ($\underline{Z}2$) des Stellgliedes (4,14), einem Regelgrößen-Sollwert (y*) und einem Regelgrößen-Istwert (y) zu jedem Abtastzeitpunkt ($t_a$) ein nächster Umschaltzeitpunkt ($t_s$), an dem zum nächstniederen oder nächsthöheren Zustand ($\underline{Z}1,\underline{Z}3$) gewechselt wird, derart ermittelt wird, daß nach Ablauf einer sich diesem Umschaltzeitpunkt ($t_s$) anschließenden halben Mindestschaltzeit ($T_{min}/2$) im geschalteten nächstniederen oder nächsthöheren Zustand ($\underline{Z}1,\underline{Z}3$) der Wert ($\xi$) eines Integrals über eine Soll-Ist-Abweichung ($y-\hat{y}$) der Regelgröße Null ist, wobei ein zeitlicher Abstand zwischen zwei Umschaltungen wenigstens gleich der Mindestschaltzeit ($T_{min}$) des Stellgliedes (4,14) ist.

2. Verfahren nach Anspruch 1, **dadurch gekennzeichnet,** daß derjenige Zustand ($\underline{Z}1,...,\underline{Z}n$) des Stellgliedes (4,14) während der Mindestschaltzeit ($T_{min}$) geschaltet ist, für den gilt:
$$\left| u_i - \hat{x} \right| = max \qquad für\ i = j,k,$$
wobei $\hat{x}$ = Sollwert eines Sollzustands ist.

3. Verfahren nach Anspruch 1, **dadurch gekennzeichnet,** daß für die Approximation des Sollwertes ($\hat{x}$) eines Sollzustands zwischen zwei Zuständen ($\underline{Z}1$ oder $\underline{Z}2,...,\underline{Z}6$ oder $\underline{Z}1$) des Stellglieds (4,14) geschaltet wird, für die gelten:
$$\left| u_j - \hat{x} \right| = min \qquad mit\ u_j > \hat{x}$$
und
$$\left| u_k - \hat{x} \right| = min \qquad mit\ u_k < \hat{x}.$$

4. Vorrichtung zur Ermittlung von Umschaltzeitpunkten ($t_s$) zur Durchführung des Verfahrens nach Anspruch 1, bei einem wertediskreten Stellglied (4,14) mit nicht vernachlässigbarer Mindestschaltzeit ($T_{min}$) und endlich vielen diskreten Zuständen ($\underline{Z}1,...,Zn$), wobei dieses Stellglied (4,14) eine Regel-Strecke (2) steuert, **dadurch gekennzeichnet,** daß eine Schaltzustands- und Schaltzeitauswahleinrichtung (6,30) vorgesehen ist, der eingangsseitig ein Regelgrößen-Istwert (y) und ein Regelgrößen-Sollwert (y*) zugeführt sind, und die ausgangsseitig mit einem Steuereingang (8) des Stellgliedes (4,14) verknüpft ist, wobei ausgehend von einem geschalteten Zustand ($\underline{Z}2$) des Stellgliedes (4,14) zu jedem Abtastzeitpunkt ($t_a$) ein nächster Umschaltzeitpunkt ($t_s$), an dem zum nächstniederen oder nächsthöheren Zustand ($\underline{Z}1,\underline{Z}3$) gewechselt wird, derart ermittelt wird, daß nach Ablauf einer sich diesem Umschaltzeitpunkt ($t_s$) anschließenden halben Mindestschaltzeit ($T_{min}/2$) im geschalteten nächstniederen oder nächsthöheren Zustand ($\underline{Z}1,\underline{Z}3$) der Wert ($\xi$) eines Integrals über eine Soll-Ist-Abweichung ($y-\hat{y}$) der Regelgröße Null ist, wobei ein zeitlicher Abstand zwischen zwei Umschaltungen wenigstens gleich der Mindestschaltzeit ($T_{min}$) des Stellgliedes (4,14) ist.

5. Vorrichtung nach Anspruch 4, **dadurch gekennzeichnet,** daß als Schaltzustandsauswahleinrichtung ein Mikroprozessor vorgesehen ist.

6. Vorrichtung nach Anspruch 4, **dadurch gekennzeichnet,** daß als Schaltzeitauswahleinrichtung ein Mikroprozessor vorgesehen ist.

7. Verwendung des Verfahrens nach Anspruch 1 und der Vorrichtung nach Anspruch 4 zur Drehzahlregelung einer Asynchronmaschine (10), wobei ein Wechselrichter (14) eines Stromzwischenkreisumrichters (16) der Asynchronmaschine (10) einen Strom einprägt.

**Claims**

1. Method for determining reversal instants ($t_s$) in a discrete value actuator (4, 14) controlling a controlled

7

system (2) with minimum switching time ($T_{min}$) which is not negligible and a finite number of discrete states ($\underline{Z}1,...,\underline{Z}n$), the values ($u_i(t)$) of which can be varied temporally, whereby proceeding from a connected state ($\underline{Z}2$) of the actuator (4, 14), a desired controlled variable value ($y*$) and an actual controlled variable value (y) at each sampling instant ($t_a$) a next reversal instant ($t_s$), at which change takes place to the next lower or next higher state ($\underline{Z}1, \underline{Z}3$), is determined in such a way that after the expiry of half a minimum switching time ($T_{min}/2$), subsequent to this reversal instant ($t_s$), in the connected next lower or next higher state ($\underline{Z}_1, \underline{Z}_3$) the value ($\xi$) of an integral of a desired-actual deviation ($y-\hat{y}$) of the controlled variable is zero, whereby a temporal interval between two switch-overs is at least the same as the minimum switching time ($T_{min}$) of the actuator (4, 14).

2. Method according to claim 1, characterized in that that state ($\underline{Z}1,...,\underline{Z}n$) of the actuator (4, 14) is connected during the minimum switching time ($T_{min}$) to which the following applies:

$$\left| u_i - \hat{x} \right| = \max \qquad \text{for } i = j,k,$$

whereby $\hat{x}$ = desired value of a desired state.

3. Method according to claim 1, characterized in that for the approximation of the desired value ($\hat{x}$) of a desired state, connection takes place between two states ($\underline{Z}1$ or $\underline{Z}2,...,\underline{Z}6$ or $\underline{Z}1$) of the actuator (4, 14) to which the following applies:

$$\left| u_j - \hat{x} \right| = \min \qquad \text{with } u_j > \hat{x}$$

and

$$\left| u_k - \hat{x} \right| = \min \qquad \text{with } u_k < \hat{x}.$$

4. Device for determining reversal instants ($t_s$) to carry out the method according to claim 1, in a dicrecte value actuator (4, 14) with minimum switching time ($T_{min}$) which is not negligible and a finite number of discrete states ($\underline{Z}1,...,\underline{Z}n$), whereby this actuator (4, 14) controls a controlled system (2), characterized in that a switching-state and switching-time selection device (6, 30) is provided, which is supplied on the input side with an actual controlled variable value (y) and a desired controlled variable value ($y*$), and which is linked on the output side to a control input (8) of the actuator (4, 14), whereby proceeding from a connected state ($\underline{Z}2$) of the actuator (4, 14) at each sampling instant (ta) a next reversal instant ($t_s$), at which change takes place to the next lower or next higher state ($\underline{Z}1, \underline{Z}3$), is determined in such a way that after the expiry of half a minimum switching time ($T_{min}/2$), subsequent to this switch-over instant ($t_s$), in the connected next lower or next higher state ($\underline{Z}1, \underline{Z}3$) the value ($\xi$) of an integral of a desired-actual deviation ($y-\hat{y}$) of the controlled variable is zero, whereby a temporal interval between two switch-overs is at least the same as the minimum switching time ($T_{min}$) of the actuator (4, 14).

5. Device according to claim 4, characterized in that a microprocessor is provided as switching-state selection device.

6. Device according to claim 4, characterized in that a microprocessor is provided as switching-time selection device.

7. Use of the method according to claim 1 and the device according to claim 4 for the speed control of an asynchronous machine (10), whereby an inverter (14) of a current-source inverter (16) injects a current into the asynchronous machine (10).

**Revendications**

1. Procédé pour déterminer des instants de commutation ($t_s$) dans un circuit de réglage (4,14), qui commande une section de régulation (2) et délivre des valeurs discrètes, avec une durée minimale de commutation ($T_{min}$) non négligeable et un grand nombre fini d'états discrets ($\underline{Z}1,...,\underline{Z}n$), dont les valeurs ($u_i(t)$) sont variables dans le temps, selon lequel, à partir d'un état commuté ($\underline{Z}2$) du circuit de réglage (4,14), une valeur de consigne ($y*$) de la grandeur de régulation et une valeur réelle (y) de la grandeur de régulation, à chaque instant d'échantillonnage ($t_a$) on détermine un instant de commutation immédiatement suivant ($t_s$), au niveau duquel on passe à l'état immédiatement inférieur ou immédiatement supérieur ($\underline{Z}1,\underline{Z}3$), de telle sorte qu'après l'écoulement de la moitié de la durée de commutation minimale ($T_{min}/2$), qui succède à cet instant de commutation ($t_s$), dans l'état commuté immédiatement inférieur et immédiatement supérieur ($\underline{Z}1,\underline{Z}3$), la valeur (x) d'une intégrale sur un écart de la valeur de consigne - valeur réelle ($y-\hat{y}$) du circuit de réglage est nulle, un intervalle de temps entre deux commutations étant au moins égal à la durée de

commutation minimale ($T_{min}$) du circuit de réglage (4,14).

2. Procédé suivant la revendication 1, caractérisé par le fait que l'état ($\underline{Z}1,...,\underline{Z}n$) du circuit de réglage (4,14), pour lequel on a :

$$\left| u_l - \overset{\wedge}{x} \right| = max \qquad \text{pour } i = j,k,$$

avec $\overset{\wedge}{x}$ = valeur de consigne d'un état de consigne, est activé pendant la durée de commutation minimale ($T_{min}$).

3. Procédé suivant la revendication 1, caractérisé par le fait que pour l'approximation de la valeur de consigne (x) d'un état de consigne, une commutation est réalisée entre deux états ($\underline{Z}1$ ou $\underline{Z}2$, ..., $\underline{Z}6$ ou $\underline{Z}1$) du circuit de réglage (4,14), pour lesquels on a :

$$\left| u_j - \overset{\wedge}{x} \right| = min \qquad \text{avec } u_j > \overset{\wedge}{x}$$

avec

$$\left| u_k - \overset{\wedge}{x} \right| = min \text{ avec } u_k < \overset{\wedge}{x}.$$

4. Dispositif pour la détermination d'instants ($t_s$) pour la mise en oeuvre du procédé suivant la revendication 1, dans lequel un circuit de réglage (4,14) délivrant des valeurs discrètes, avec une durée minimale de commutation négligeable ($T_{min}$) et un grand nombre fini d'états discrets ($\underline{Z}1,...,\underline{Z}n$), ce circuit de réglage (4,14) commandant une section de régulation (2), caractérisé par le fait qu'il est prévu un dispositif (6,30) de sélection d'états de commutation et d'instants de commutation, à l'entrée duquel sont envoyés une valeur réelle (x) de la grandeur de régulation et une valeur de consigne (y∗) de la grndeur de régulation, et qui, côté sortie, est raccordée à une entrée de commande (8) du circuit de réglage (4,14), et dans lequel à partir d'un état commuté ($\underline{Z}2$) du circuit de réglage (4,14), on détermine, à chaque instant d'échantillonnage ($t_a$), un instant de commutation immédiatement suivant ($t_s$), au niveau duquel on passe à l'état immédiatement inférieur ou immédiatement supérieur ($\underline{Z}1,\underline{Z}3$), de telle sorte qu'après l'écoulement de la moitié de la durée de commutation minimale ($T_{min}/2$), qui succède à cet instant de commutation ($t_s$), dans l'état commuté immédiatement inférieur et immédiatement supérieur ($\underline{Z}1,\underline{Z}3$), la valeur ($\xi$) d'une intégrale sur un écart de la valeur de consigne - valeur réelle ($y-\overset{\wedge}{y}$) du circuit de réglage est nulle, un intervalle de temps entre deux commutations étant au moins égal à la durée de commutation minimale ($T_{min}$) du circuit de réglage (4,14).

5. Dispositif suivant la revendication 4, caractérisé par le fait qu'un microprocesseur est prévu comme dispositif de sélection d'état de commutation.

6. Dispositif suivant la revendication 4, caractérisé par le fait qu'un microprocesseur est prévu en tant que dispositif de sélection d'instants de commutation.

7. Utilisation du procédé suivant la revendication 1 et du dispositif suivant la revendication 4 pour la régulation de la vitesse de rotation d'une machine asynchrone (10), un onduleur (14) d'un mutateur à circuit intermédiaire de courant (16) injectant un courant dans la machine asynchrone (10).

FIG 1

FIG 2

FIG 3

FIG 4

FIG 5

FIG 6

FIG 7

FIG 8

FIG 9

FIG 11

FIG 10

FIG 12

$T_{an}$[msec]

Herkömmliches Verfahren

Max

Zust. Schaltverfahren

Mittelwert

Min

Grenze durch Zwischenkreisstromdynamik

**FIG 13**

$f_u$[Hz]

Trapezmodulation

Optimierte Pulsmuster

5-fach

3-fach

Zust. Schaltverfahren

Vollblock

**FIG 14**